# EUROPEAN PATENT SPECIFICATION

(11) **EP 2 857 248 B1**
(45) Date of publication and mention of the grant of the patent: **13.12.2017**
(21) Application number: 13382381.5
(22) Date of filing: 01.10.2013
(51) Int. Cl.: B60K 35/00, B60R 16/023, B60W 40/09, B60W 50/14, G09B 9/052

(54) **Method for displaying information pertaining to efficient driving of a motor vehicle**
Verfahren zur Anzeige von Informationen im Zusammenhang mit effizientem Fahren eines Kraftfahrzeugs
Procédé pour afficher des informations concernant l'efficacité de conduite d'un véhicule automobile

(43) Date of publication of application: 08.04.2015
(73) Proprietor: Seat, S.A., 08760 Martorell (ES)
(72) Inventor: Baños, Victor, 08860 Barcelona (ES); Arasa Gaspar, Anna, 08024 Barcelona (ES); Rodriguez Bosch, Rubén, 08230 Barcelona (ES); Molina Martínez, Daniel, 08028 Barcelona (ES)
(74) Representative: Isern-Jara, Nuria

(56) References cited:
- WO-A1-2012/132541
- DE-A1- 10 056 756
- DE-A1-102008 055 656
- DE-A1-102010 018 826
- JP-A- 2008 055 963

## Description

### OBJECT OF THE INVENTION

The patent application herein relates to a method for displaying information pertaining to consumption efficient driving of a motor vehicle according to claim 1, which incorporates significant innovations and advantages.

In addition, this patent application also relates to a device for displaying information pertaining to consumption efficient driving of a motor vehicle according to claim 9.

### BACKGROUND OF THE INVENTION

The screen of the car in the centre console of a motor vehicle is usually used as a device for displaying information, such that the user can query the data available for said motor vehicle.

The screen of the car is usually located on the instrument panel of the motor vehicle or in the centre console, therefore being available to both the driver of the motor vehicle and the passenger, and can be viewed by both one or the other. Said method of displaying the motor vehicle information is usually used for adjusting driver assistance variables, and also for navigation systems, for multimedia and/or telematics. Additionally, and given the increasing importance of efficient, and therefore, ecological driving, motor vehicles incorporate the feature of giving instructions or advice to the drivers, thereby enabling them to drive more efficiently.

According to document DE19961871A1 of the state of the art, a driver information device in which various operational data is detected by means of sensors and is fed to a control unit is known. While taking the current operating status into account, said control unit produces a rule of precedence for the operational data that is relevant and useful to the driver under the current operating conditions. The information is provided by using an output unit, which may contain both an acoustic signal output and a screen.

Furthermore, document US5648755A of the prior art describes a device that identifies the instantaneous status of a driver and the instantaneous status of a motor vehicle on the basis of information detected in relation to the motor vehicle. Based on the instantaneous statuses identified, alone or in combination, one of the preset display modes and specified information elements is selected, and displayed on a screen of a monitor.

On the other hand, document ES8308425A1 of the prior art describes a device for providing a visual indication of the output values in respect of operating conditions or other parameters, for display on the dashboard of a display panel, for example in automotive vehicles. Said display panel has a plurality of indicator blocks distributed thereon. A logic circuit provides data to the respective indicator blocks via data buses. The logic circuit is connected via connection lines to the sensor inputs. Each of the indicator blocks includes a displacement register connected to a data line. The stages of the displacement register are connected to respective indicator elements that form the indicator blocks. The status of changes of the respective displacement register will provide indications for departure.

It is also known from the state of the art, as per document WO2012132541, a driving assistance device that includes the features of the preamble of claim 1, which is in detail a display unit, which displays an energy consumption rate map, which shows a distribution of an energy consumption rate during travel of a vehicle, an icon which indicates a current energy consumption rate of the vehicle on the energy consumption rate map, the energy consumption rate being defined by a speed of the vehicle and an acceleration/deceleration of the vehicle, and a direction defining display portion which defines a moving direction of the icon, wherein the energy consumption rate map displays an eco region, which is a region in which the energy consumption rate is lower than a predetermined value, with a color different from those of the other regions of the energy consumption rate map in the display unit.

It is also known from the state of the art, as per document DE102010018826, a method that involves determining multiple driving style parameters based on defined evaluation criteria. Multiple evaluation values are continuously formed by collection of system measuring values to assess the driving style in reference to fuel consumption. Multiple driving conditions of the motor vehicle are recorded, where each driving condition is recorded as a value. It is also related to a driving assistance system for response of the fuel consumption based of driving conditions.

It is also known from the state of the art, as per document DE10056756, a driving style information that is recorded and driving technique parameters, by comparison with reference values. The reference values are obtained by using driving style information from vehicles in the surroundings of the vehicle concerned. A mathematical averaging process is used to calculate the reference value. Only those vehicles traveling in the same direction or of the same class may be selected.

It is also known from the state of the art, as per document JP2008055963, a display device for a vehicle, which determines whether or not travel distance Fe(km/L) expressed in terms of the unit quantity by fuel consumed near the present time is larger than a determination value, is equipped with a determination means for determining travel to be in the economy/ecological travel when whether or not the travel of an automobile 1 is in economy/ecological travel is determined and when the travel distance Fe(km/L) is larger than a determination value, with a calculation means for calculating a cumulative value through the accumulation of the economy/ecological numeric value Ev(km/L) in a timing relation by taking the economy/ecological travel as the economy/ecological numeric value Ev(km/L) by subtracting the determination value from the travel distance Fe(km/L) when the travel is determined to be in the economy/ecological travel,; and with a displaying means for displaying the cumulative value as a first display image.

It is also known from the state of the art, as per document DE102008055656, a device that displays, calculates and stores an individual value and an average value of a measured positive or negative acceleration characteristic i.e. braking characteristic, of single or multiple trips. The device evaluates the individual value and the average value using value judgment by output signals or switching impulses. The device requests a vehicle driver in a didactic manner, to limit a high deceleration value by brakes during a continuous trip or a subsequent trip. The device produces the value judgment by acoustic signals or mathematical techniques.

Graphical displays of information corresponding to the change in a certain status of the motor vehicle, not actuated by the driver, by means of written notice on a screen, are therefore known in the prior art. Detecting the information that has changed, and having the driver read it, requires the latter to divert their attention from the road, with the ensuing danger that this entails. Alternatively, notifications via tones or beeps from the motor vehicle, which means the driver does not have to take their eyes off the road are known. This form of notification does not provide information about what has changed in the motor vehicle status, which can confuse the driver.

Therefore, there is still a need to present information related to the decrease in consumption driving efficiency in a highly visual and intuitive manner.

### DESCRIPTION OF THE INVENTION

According to the invention herein, this object is achieved by a method and a device for displaying information pertaining to consumption efficient driving of a motor vehicle according to independent claims 1 and 9. Additional advantages of the invention are presented in the dependent claims of the accompanying description below.

In the present invention, the information is displayed such that it is very easily comprehensible and, therefore, losing focus in respect of road conditions is minimised. Therefore, the information is displayed such that the driver can intuitively and quickly read the display and understand it, requiring minimum time to handle such information, Even more so, taking into account the increase in the variables currently available to the user.

In particular, the driver can view the previous data related to the driving task, and gauge if said driving task is improving or worsening based on efficiency criteria, preferably in a way that the driver perceives this while only briefly having to divert their attention from the road, thereby improving their safety

According to the invention, the method for displaying information pertaining to consumption efficient driving of a motor vehicle is characterised in that:
- an image is displayed on a graphical display device by means of a control device,
- the control device receives data from at least one sensor in a predetermined control period and compares it with a number of reference values,
and the image comprises a plurality of sections corresponding to said reference values and a graphical element that passes between the plurality of sections based on said comparison.
The driver thus receives summarised information, thereby requiring their minimum attention, leading to driver safety. On the other hand, the method for displaying information in sections, which correspond to more or less efficient driving levels, motivate the driver to modulate their driving style in order to move to a higher level. The transition from a lower level to a higher level is a positive message to the way a driver is driving and, on the contrary, the transition from a higher level to a lower level is a negative message that the driver will tend to avoid. Efficient driving is understood as a driving practice in which the fuel and/or electricity consumption of the motor vehicle are as low as possible, resulting in cost savings and a reduction in pollutant emissions.

More specifically, the transition of the graphical element between sections occurs progressively. In this way, the visual presentation is more elegant, and above all, the transition from one level to another is clearer, otherwise if it were not progressive, the driver may doubt what the previous level was, as the latter has to be attentive to other circumstances related to driving, traffic or conversations with other occupants of the motor vehicle.

Advantageously, the transition of the graphical element between sections comprises an optical and/or acoustic signal. The information is therefore received by the driver, although in response to driving circumstances at that time, the driver cannot divert their attention from the road. The driver is further alerted to the start of a progressive transition from one level to another, having the opportunity to divert their attention to look at the screen and view the departure level and arrival level, as a result of their driving practice.

According to another aspect of the invention, the data of at least one sensor and the section on which the graphical element is located are stored. In this way, when the motor vehicle is turned off, all data related to consumption, speed, acceleration, etc, and the last level the graphical element was at are all recorded. The next time the motor vehicle is started, the aforementioned last recorded level is used as a starting point and historical driving data is taken into consideration. According to the invention, the plurality of sections of the image display sections of a road in perspective, and the graphical element displays a motor vehicle in perspective. Hence, the visual effect for the driver is more realistic.

According to another aspect of the invention, the image displayed on the graphical display device comprises at least one additional graphical element that shows the magnitude of the variation in vehicle speed accumulated in a predetermined time. In this way, the driver not only receives a detailed impression of whether the driving task is moving away from optimal efficiency, but can also view previous data and gauge whether the driving is increasing or decreasing in efficiency.

According to yet another aspect of the invention, the image displayed on the graphical display device comprises at least one additional graphical element that instantly shows the magnitude of the variation of the vehicle speed. Hence, the driver therefore receives a reliable impression of how far driving is shifting at all times, in respect of what would be optimal and ecologically efficient driving.

The invention herein further relates to a device for displaying information pertaining to consumption efficient driving of a motor vehicle, comprising at least one control device, at least one graphical display device on which an image is displayed, at least one sensor, and a memory, configured such that:
- an image is displayed on the graphical display device by means of the control device,
- the control device receives data from at least one sensor and compares it with a number of reference values,
and the image comprises a plurality of sections corresponding to said reference values and a graphical element that passes between the plurality of sections based on said comparison between the data of at least one sensor and the reference values.
The driver thus receives summarised information, thereby requiring their minimum attention, leading to driver safety. On the other hand, the method for displaying information in sections, which correspond to more or less efficient driving levels, motivate the driver to modulate their driving style in order to move to a higher level. The transition from a lower level to a higher level is a positive message to the way driver is driving and, on the contrary, the transition from a higher level to a lower level is a negative message that the driver will tend to avoid.

According to another aspect of the invention, the data of at least one sensor and the section on which the graphical element is located are stored in the memory. In this way, when the motor vehicle is turned off, all data related to consumption, speed, acceleration, etc, and the last level the graphical element was at are all recorded. The next time the motor vehicle is started, the aforementioned last recorded level is used as a starting point and historical driving data is taken into consideration.

According to another aspect of the invention, the graphical display device is a screen of the motor vehicle and/or the screen of an external electronic device. Said flexibility has the added advantage of the motor vehicle not necessarily requiring a screen, but an external electronic device can be used, which are in widespread use nowadays, which, in some cases, have sensors that can measure accelerations, which can be used as an alternative to those in the motor vehicle itself.

According to yet another aspect of the invention, at least one sensor is a sensor inside the motor vehicle or inside the external electronic device, wherein the speed variation sensors of the external electronic device can be used as an alternative to those of the motor vehicle itself. On the other hand, and more specifically, the means for detecting the speed variation is a positioning system of the motor vehicle or the external electronic device, said means being able to be used as an alternative to sensors that can measure acceleration in the motor vehicle itself.

The accompanying drawings show, by way of non-limiting example, a method and an associated device for displaying information pertaining to consumption efficient driving of a motor vehicle, formed according to the invention. Other characteristics and advantages of the aforementioned method and associated device, for displaying information pertaining to consumption efficient driving of a motor vehicle, object of the invention herein, will become apparent from the description of a preferred, although not exclusive embodiment, which is illustrated by way of non-limiting example in the drawings appended, in which:

### BRIEF DESCRIPTION OF THE DRAWINGS

Figure 1.- General front, perspective view of the motor vehicle interface with the user at the dashboard, according to the invention herein;
Figure 2.- Schematic representation of the components and systems involved in the development of the invention herein;
Figure 3. - View of a method for displaying the image of a plurality of sections corresponding to said reference values and a graphical element that passes between the plurality of sections which indicate driving efficiency, according to the invention herein;

### DESCRIPTION OF A PREFERRED EMBODIMENT

In view of the mentioned figures and according to the adopted numbering, an example of a preferred embodiment of the invention can be seen therein, which comprises the parts and elements indicated and described in detail below.

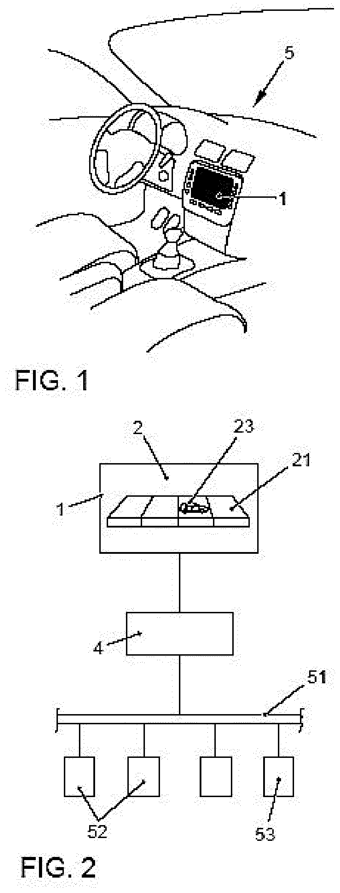

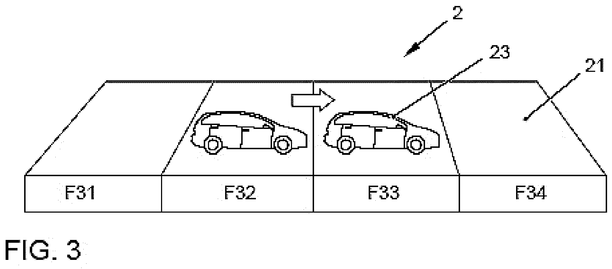

Thus, as seen in Figures 2 and 3, the method for displaying information pertaining to consumption efficient driving of a motor vehicle 5, wherein an image 2 is displayed on a graphical display device 1 by means of a control device 4, the control device 4 receives data from at least one sensor 52 in a predetermined control period and compares it with a number of reference values, and the image 2 comprises a plurality of sections 211 corresponding to said reference values and a graphical element 23 that passes between the plurality of sections 211 based on the aforementioned comparison. In a preferred embodiment, the motor vehicle 5 comprises a plurality of sensors 53 that can recognise different driving characteristics. The device associated to the display method comprises a control unit 4 that receives data from said sensors 53 and evaluates the characteristics of the driving from an ecological/environmental perspective. Additionally, a series of targets are programmed into the control unit 4 in relation to these driving characteristics distributed on different levels that the driver must achieve to move from one level to another. When the control unit 4 has detected, through the information from the sensors 53, that the targets necessary to move from one level to another has been achieved, a series of graphical data displayed on the screen 1 is generated such that the transition from one level to another is shown.

More specifically, as seen in Figure 3, the transition of the graphical element 23 between sections 211 occurs progressively, said transition comprising, in a preferred embodiment, an optical and/or acoustic signal.

According to another aspect of the invention, at least one sensor 53 and the section 211 on which the graphical element is located are stored.

On the other hand, and preferably, as seen in Figure 3, the plurality of sections 211 of the image 2 display sections of a road 21, in perspective, and the graphical element 23 displays a motor vehicle 5 in perspective. In a particular embodiment the sections of a road 21 in perspective, and the motor vehicle 5 in perspective, are shown in a side view.

According to another aspect of the invention, the image displayed on the graphical display device 1 comprises at least one additional graphical element that shows the magnitude of the variation in vehicle speed accumulated in a predetermined time.

According to another aspect of the invention, the image displayed on the graphical display device 1 comprises at least one additional graphical element that instantly shows the magnitude of the variation of the vehicle speed.

In respect of the device for displaying information pertaining to consumption efficient driving of a motor vehicle 5, as shown in Figures 2 and 3, said device comprises at least one control device 4, at least one graphical display device 1 on which an image 2 is displayed, at least one sensor 53, and a memory, configured such that:
- an image 2 is displayed on the graphical display device 1 by means of the control device 4,
- the control device 4 receives data from at least one sensor 53 and compares it with a number of reference values,
and the image 2 comprises a plurality of sections 211 corresponding to said reference values and a graphical element 23 that passes between the plurality of sections 211 based on the comparison between the data of at least one sensor and the reference values.

According to another aspect of the invention at least one sensor 53 and the section 211 on which the graphical element is located are stored in the memory.

According to yet another aspect of the invention, and as seen in Figure 1, the graphical display device 1 is a screen in the motor vehicle 5 or a screen of an external electronic device.

According to yet another aspect of the invention, and as seen in Figure 2, at least one sensor 53 is a sensor inside the motor vehicle 5 or inside an external electronic device. Therefore, and according to one embodiment, accelerations and/or inertia are detected by the internal accelerometers of the motor vehicle 5 (for example those used for sensorising the deployment of the airbag) or by the accelerometers of the external electronic device (for example, a smartphone). In the case of the external electronic device, and in one particular embodiment, the accelerometers adapt the screen in a vertical or horizontal direction when the smartphone is pointed in either direction. Additionally, and as seen in Figure 2, the device for displaying information pertaining to efficient driving of a car 5 comprises means for detecting the speed variation 53 that is a positioning system of the vehicle 5 or the external electronic device. Acceleration can be calculated from the speed, which is taken, in this particular embodiment, from the vehicle's instruments 5 or from the GPS readings (global positioning system) of the mobile device (external GPS or smartphone with GPS).

The details, shapes and dimensions and other accessory elements as well as the components used in the implementation of the aforementioned method, and associated device for displaying information pertaining to consumption efficient driving of a motor vehicle may be conveniently replaced by others which do not depart from the scope defined by the claims contained in the list hereinafter.

### List of numerical references:

(1) Graphical display device (motor vehicle interface screen)
(2) Image
(21) Road
(211) Section
(23) Graphical element
(4) Control device (onboard computer)
(5) Motor vehicle
(51) Internal communication channel of the motor vehicle
(52) Other systems in the motor vehicle
(53) Sensors

### List of references used as abbreviations of the text within the figures

- F31: Level 1
- F32: Level 2
- F33: Level 3
- F34: Level 4

## Claims

1. A method for displaying information pertaining to consumption efficient driving of a motor vehicle (5) wherein:
- an image (2) is displayed on a graphical display device (1) by means of a control device (4),
- the control device (4) receives data from at least one sensor (53) in a predetermined control period and compares them with a number of reference values,
and the image (2) comprises a plurality of sections (211) corresponding to said reference values and a graphical element (23) that passes between the plurality of sections (211) based on said comparison,
**characterised in that** the plurality of sections (211) of the image (2) represent sections of a road (21) in perspective, and the graphical element (23) displays a motor vehicle (5) in perspective.

2. A method according to claim 1 **characterised in that** the transition of the graphical element (23) between sections (211) occurs progressively.

3. A method according to claim 2 **characterised in that** the transition of the graphical element (23) between sections (211) comprises an optical and/or acoustic signal.

4. A method according to claim 1 **characterised in that** the data of at least one sensor (53) and the section (211) on which the graphical element is located are stored.

5. A method according to claim 1 **characterised in that** the image displayed on the graphical display device 1 comprises at least one additional graphical element that shows the magnitude of a variation of the vehicle speed accumulated in a predetermined time.

6. A method according to claim 1 **characterised in that** the image displayed on the graphical display device comprises at least one additional graphical element that instantly shows the magnitude of a variation of the vehicle speed.

7. A device for displaying information pertaining to consumption efficient driving of a motor vehicle (5), comprising at least one control device (4), at least one graphical display device (1) on which an image (2) is displayed, at least one sensor (53), and a memory, configured such that:
- an image (2) is displayed on the graphical display device (1) by means of the control device (4),
- the control device (4) receives data from at least one sensor (53) and compares them with a number of reference values,
and the image (2) comprises a plurality of sections (211) corresponding to said reference values and a graphical element (23) that passes between the plurality of sections (211) based on the aforementioned comparison between the data of at least one sensor and the reference values,
**characterised in that** the plurality of sections (211) of the image (2) represent sections of a road (21) in perspective, and the graphical element (23) displays a motor vehicle (5) in perspective.

8. A device according to claim 7 **characterised in that** the data of at least one sensor (53) and the section on which the graphical element is located are stored in the memory.

9. A device according to claim 7 **characterised in that** the graphical display device (1) is a screen of the motor vehicle (5) and/or a screen of an external electronic device.

10. A device according to claim 7 **characterised in that** at least one sensor (53) is a sensor inside the motor vehicle (5) or inside an external electronic device.

## Patentansprüche

1. Verfahren zur Anzeige von Informationen im Zusammenhang mit verbrauchseffizientem Fahren eines Kraftfahrzeugs (5), wobei:
- ein Bild (2) auf einer grafischen Anzeigevorrichtung (1) mittels einer Steuervorrichtung (4) angezeigt wird,
- die Steuervorrichtung (4) Daten von mindestens einem Sensor (53) in einem vorbestimmten Steuerzeitraum empfängt und sie mit einer Anzahl von Referenzwerten vergleicht,
und das Bild (2) eine Vielzahl von Abschnitten (211), die den Referenzwerten entsprechen, und ein grafisches Element (23) umfasst, das sich zwischen der Vielzahl von Abschnitten (211) basierend auf dem Vergleich bewegt,
**dadurch gekennzeichnet, dass** die Vielzahl von Abschnitten (211) des Bildes (2) Abschnitte einer Straße (21) perspektivisch darstellt und das grafische Element (23) ein Kraftfahrzeug (5) perspektivisch anzeigt.

2. Verfahren nach Anspruch 1, **dadurch gekennzeichnet, dass** der Übergang des grafischen Elements (23) zwischen Abschnitten (211) progressiv erfolgt.

3. Verfahren nach Anspruch 2, **dadurch gekennzeichnet, dass** der Übergang des grafischen Elements (23) zwischen Abschnitten (211) ein optisches und/oder akustisches Signal umfasst.

4. Verfahren nach Anspruch 1, **dadurch gekennzeichnet, dass** die Daten des mindestens einen Sensors (53) und der Abschnitt (211), auf dem das grafische Element positioniert ist, gespeichert werden.

5. Verfahren nach Anspruch 1, **dadurch gekennzeichnet, dass** das auf der grafischen Anzeigevorrichtung 1 angezeigte Bild mindestens ein zusätzliches grafisches Element umfasst, welches die Schwankungsbreite der Fahrzeuggeschwindigkeit zeigt, die in einer vorbestimmten Zeit angefallen ist.

6. Verfahren nach Anspruch 1, **dadurch gekennzeichnet, dass** das auf der grafischen Anzeigevorrichtung angezeigte Bild mindestens ein zusätzliches grafisches Element umfasst, welches die Schwankungsbreite der Fahrzeuggeschwindigkeit als Sofortwert zeigt.

7. Vorrichtung zur Anzeige von Informationen im Zusammenhang mit verbrauchseffizientem Fahren eines Kraftfahrzeugs (5), umfassend mindestens eine Steuervorrichtung (4), mindestens eine grafische Anzeigevorrichtung (1), auf der ein Bild (2) angezeigt wird, mindestens einen Sensor (53) und einen Speicher, der konfiguriert ist, so dass:
- ein Bild (2) auf der grafischen Anzeigevorrichtung (1) mittels einer Steuervorrichtung (4) angezeigt wird,
- die Steuervorrichtung (4) Daten von mindestens einem Sensor (53) empfängt und sie mit einer Anzahl von Referenzwerten vergleicht,
und das Bild (2) eine Vielzahl von Abschnitten (211), die den Referenzwerten entsprechen, und ein grafisches Element (23) umfasst, das sich zwischen der Vielzahl von Abschnitten (211) basierend auf dem genannten Vergleich zwischen den Daten des mindestens einen Sensors und den Referenzwerten bewegt,
**dadurch gekennzeichnet, dass** die Vielzahl von Abschnitten (211) des Bildes (2) Abschnitte einer Straße (21) perspektivisch darstellen und das grafische Element (23) ein Kraftfahrzeug (5) perspektivisch anzeigt.

8. Vorrichtung nach Anspruch 7, **dadurch gekennzeichnet, dass** die Daten des mindestens eines Sensors (53) und der Abschnitt, auf dem das grafische Element positioniert ist, im Speicher gespeichert werden.

9. Vorrichtung nach Anspruch 7, **dadurch gekennzeichnet, dass** die grafische Anzeigevorrichtung (1) ein Bildschirm des Kraftfahrzeugs (5) und/oder ein Bildschirm einer externen elektronischen Vorrichtung ist.

10. Vorrichtung nach Anspruch 7, **dadurch gekennzeichnet, dass** mindestens ein Sensor (53) ein Sensor im Inneren des Kraftfahrzeugs (5) oder im Inneren einer externen elektronischen Vorrichtung ist.

## Revendications

1. Procédé d'affichage d'informations relatives à la conduite économe d'un véhicule à moteur (5) dans lequel :
- une image (2) est affichée sur un dispositif d'affichage graphique (1) au moyen d'un dispositif de commande (4),
- le dispositif de commande (4) reçoit des données provenant d'au moins un capteur (53) dans une période de commande prédéterminée et les compare à un nombre de valeurs de référence,
et l'image (2) comprend une pluralité de sections (211) correspondant auxdites valeurs de référence et un élément graphique (23) qui passe entre la pluralité de sections (211) sur la base de ladite comparaison,
**caractérisé en ce que** la pluralité de sections (211) de l'image (2) représentent des sections d'une route (21) en perspective, et l'élément graphique (23) affiche un véhicule à moteur (5) en perspective.

2. Procédé selon la revendication 1 **caractérisé en ce que** la transition de l'élément graphique (23) entre les sections (211) se produit progressivement.

3. Procédé selon la revendication 2 **caractérisé en ce que** la transition de l'élément graphique (23) entre les sections (211) comprend un signal optique et/ou acoustique.

4. Procédé selon la revendication 1 **caractérisé en ce que** les données d'au moins un capteur (53) et la section (201) sur laquelle est situé l'élément graphique sont stockées.

5. Procédé selon la revendication 1 **caractérisé en ce que** l'image affichée sur le dispositif d'affichage graphique 1 comprend au moins un élément graphique supplémentaire qui montre l'amplitude d'une variation de la vitesse du véhicule accumulée dans un temps prédéterminé.

6. Procédé selon la revendication 1 **caractérisé en ce que** l'image affichée sur le dispositif d'affichage graphique comprend au moins un élément graphique supplémentaire qui montre instantanément l'amplitude d'une variation de la vitesse du véhicule.

7. Dispositif d'affichage d'informations relatives à la conduite économe d'un véhicule à moteur (5), comprenant au moins un dispositif de commande (4), au moins un dispositif d'affichage graphique (1) sur lequel une image (2) est affichée, au moins un capteur (53), et une mémoire, configuré de telle sorte que :
- une image (2) est affichée sur le dispositif d'affichage graphique (1) au moyen du dispositif de commande (4),
- le dispositif de commande (4) reçoit des données provenant d'au moins un capteur (53) et les compare à un nombre de valeurs de référence,
et l'image (2) comprend une pluralité de sections (211) correspondant auxdites valeurs de référence et un élément graphique (23) qui passe entre la pluralité de sections (211) sur la base de la comparaison susmentionnée entre les données d'au moins un capteur et les valeurs de référence,
**caractérisé en ce que** la pluralité de sections (211) de l'image (2) représentent des sections d'une route (21) en perspective, et l'élément graphique (23) affiche un véhicule à moteur (5) en perspective.

8. Dispositif selon la revendication 7 **caractérisé en ce que** les données d'au moins un capteur (53) et la section sur laquelle est situé l'élément graphique sont stockées dans la mémoire.

9. Dispositif selon la revendication 7 **caractérisé en ce que** le dispositif d'affichage graphique (1) est un écran du véhicule à moteur (5) et/ou un écran d'un dispositif électronique externe.

10. Dispositif selon la revendication 7 **caractérisé en ce que** l'au moins un capteur (53) est un capteur à l'intérieur du véhicule à moteur (5) ou à l'intérieur d'un dispositif électronique externe.
